# EUROPÄISCHE PATENTSCHRIFT

(11) **EP 3 741 596 B1**
(45) Veröffentlichungstag und Bekanntmachung des Hinweises auf die Patenterteilung: **23.02.2022**
(21) Anmeldenummer: 20174831.6
(22) Anmeldetag: 14.05.2020
(51) Int. Cl.: B60J 1/20, B60J 7/00

(54) **BESCHATTUNGSSYSTEM FÜR EINE TRANSPARENTE DACHFLÄCHE EINES FAHRZEUGS**
SHADING SYSTEM FOR A TRANSPARENT ROOF SURFACE OF A VEHICLE
SYSTÈME D'OMBRAGE POUR UNE SURFACE DE TOIT TRANSPARENTE D'UN VÉHICULE

(30) Priorität: 21.05.2019 DE 102019207420
(43) Veröffentlichungstag der Anmeldung: 25.11.2020
(73) Patentinhaber: Magna Car Top Systems GmbH, 74321 Bietigheim-Bissingen (DE)
(72) Erfinder: KOSTADINOV, Metodi, 74076 Heilbronn (DE)
(74) Vertreter: Völger, Silke Beatrix

(56) Entgegenhaltungen:
- DE-A1-102006 034 446
- DE-T2-602005 004 894
- US-A1- 2016 236 548

## Beschreibung

Die vorliegende Erfindung betrifft ein Beschattungssystem für eine transparente Dachfläche eines Fahrzeugs.

Es sind Beschattungssysteme für transparente Dachbereiche von Kraftfahrzeugen bekannt, bei denen ein flexibler, textiler Stoff bzw. eine Stoffbahn unterhalb eines transparenten Dachbereichs bewegbar angeordnet ist. Der textile Stoff kann von einer Ruhestellung in der transparente Dachbereich nicht abgedeckt ist in eine Betriebsstellung, in der der transparente Dachbereich zumindest teilweise abgedeckt ist, bewegt werden. Der textile Stoff bzw. die Rollobahn ist dabei in seiner Ruhestellung außerhalb des transparenten Dachbereichs auf einer Rollowelle aufgewickelt. Bei diesem bekannten Beschattungssystem wir die Stoffbahn einlagig auf der Rollowelle auf.- bzw. abgewickelt und die Rollowelle ist entweder im vorderen oder hinteren Endbereich des transparenten Dachbereichs fahrzeugfest angebunden.

Aus der DE 10 2004 039 094 A1 ist eine Bedien- und Steuerungseinrichtung für eine Rolloanordnung zur Abdeckung einer transparenten Dachfläche bekannt. Die Rolloanordnung weist wenigstens ein Rollo mit einer Rollowelle und einem mittels eines elektrischen Stellantriebs gegen die Kraft einer Rückholfeder der Rollowelle abwickelbaren Rollotuchs auf. Die Rollowelle kann über seitliche Führungsschienen in oder entgegen der Fahrtrichtung verschoben werden, so dass die durch das abgewickelte Rollotuch erzeugte Beschattungsfläche verschoben werden kann. Zum Ändern der Beschattungsfläche oder bzw. verschieben der Beschattungsfläche sind in einer Bedieneinrichtung Schalter zum Einstellen der Größe der Beschattungsfläche und/oder Abwickeln oder Aufwickeln der Beschattungsfläche vorgesehen.

Aus der DE 10 2006 034 446 A1 ist eine Rollovorrichtung für ein Kraftfahrzeug mit einem ersten flexiblen Flächengebilde und einem zweiten textilen Flächengebilde bekannt. Die beiden flexiblen Flächengebilde sind dabei derart an einer drehbaren Rolloachse befestigt und angeordnet, dass sie auf die Rolloachse aufwickelbar und in unterschiedliche Richtungen von der Rolloachse abwickelbar sind.

Des Weiteren ist aus der US 2016/0236548 A1 eine Rolloanordnung für ein Kraftfahrzeug bekannt, wobei diese eine im hinteren Randbereich der Dachöffnung, unterhalb eines stationären Dachteils, verdeckt angeordnete Rollowelle mit einer Rollobahn aufweist. Die Rolloanordnung ist zum Abdecken der Dachöffnung vorgesehen, wobei die Rolloanordnung eine Rollobahn umfasst, wobei sich die Rollbahn ausgehend von der Rollowelle zunächst in einer ersten Richtung, dann um ein Umlenkelement und schließlich in einer entgegengesetzten zweiten Richtung und zurück erstreckt. Die Rollobahn ist mittels eines Endbereichs im Bereich der Rollowelle an einem stationären Element der offenen Dachkonstruktion angebracht. Das Umlenkelement ist parallel zu der ersten und zweiten Richtung, entsprechend der Länge der Rollobahn, die auf die Rollowelle oder von dieser Rollowelle gewickelt wird, beweglich.

Aus dem Dokument DE 60 2005 004 894 T2 ist ein Beschattungssystem für eine transparente Dachfläche bekannt, bei dem unter Nutzung des Flaschenzugprinzips eine aus drei Abdeckungsteilen bestehende Rollobahn ab- und aufgewickelt werden kann. Zur Vermeidung des Durchhängens der langen Rollobahn ist der mittlere Bereich starr ausgeführt.

Die vorliegende Erfindung stellt sich die Aufgabe, ein Beschattungssystem für eine transparente Dachfläche derart weiterzubilden, dass es einfach und kostengünstig ausgebildet ist, an eine vorhandene Dachkrümmung besser anpassbar ist und eine schnelle Beschattung ermöglicht.

Diese Aufgabe löst die vorliegende Erfindung durch ein Beschattungssystem mit den in Patentanspruch 1 angegebenen Merkmalen.

Durch das gemäß Anspruch 1 angegebene Beschattungssystem wobei die Rollowelle in der Mitte eines abzudunkelnden Sichtfeldes bzw. in der Mitte des transparenten Dachbereichs fahrzeugfest angeordnet ist, und wobei die beiden Rollobahnen über ihren einander zugewandten Endbereich an der Rollowelle derart befestigt sind, dass bei einer Drehbewegung der Rollowelle die Rollobahnen parallel zueinander auf der Rollowelle aufgewickelt oder abgewickelt werden, und wobei eine der Rollobahnen einen ersten vorderen Teilbereich des Dachbereichs und die andere Rollobahn einen zweiten in Fahrtrichtung gesehenen hinteren Teilbereich abdecken kann, wird der gesamte abzudeckende Bereich in zwei Teilbereiche aufgeteilt, wobei die Verstellung der Rollobahnen über eine Rotation der Rollowelle gleichzeitig erfolgt. Hierbei ist die Rollowelle außermittig angeordnet.

Durch die Aufteilung des Beschattungselementes in zwei unterschiedlich große Felder, ist eine Anpassung der Rollobahnen an eine übliche Dachkrümmung besser möglich. Des Weiteren kann durch die gleichzeitige Betätigung von zwei Rollobahnen eine gewünschte Beschattung schneller erfolgen.

Erfindungsgemäß umfassen die beiden Rollobahnen jeweils einen zweiten Endbereich, der als freies Ende über Antriebselemente in seitlichen in Fahrzeuglängsrichtung parallel beabstandet zueinander angeordneten Führungsschienen gleitend verschoben werden können. Eine der beiden Rollobahnen wird dabei bevorzugt über ein Umlenkelement, um 180 Grad in Richtung auf die Rollowelle umgelenkt und die Rollobahn wird an ihrem freien Endbereich im Bereich der Rollowelle fahrzeugfest angebunden. Die zweite Rollobahn wird ohne Umlenkung um 180 Grad nach hinten geführt und über ihren zweiten Endbreich an einem Zugspriegel angebunden.

Aufgrund dieser Umlenkung und Anbindung der ersten Stoffbahn und der Anbindung und Anordnung der zweiten Stoffbahn ist der mittels der umgelenkten Stoffbahn abzudeckende Teilbereich hinsichtlich seiner Größe in der Längsausrichtung halb so groß wie der Teilbereich der nicht umgelenkten Stoffbahn. Die Aufteilung der abzudeckenden Teilbereiche entspricht dabei einem Verhältnis 1:2.

Bei einer entsprechenden Umlenkung der ersten Stoffbahn über beispielsweise zwei Umlenkrollen ist die Aufteilung der abzudeckenden Teilbereiche im Verhältnis 1:3.

Die vorliegende Erfindung basiert dabei auf der Verwendung des Prinzips des Flaschenzuges und nutzt gezielt die Wegeübersetzung zur Positionierung der Rollowelle in einem außermittigen Bereich. Hierbei sind die erste sowie zweite Stoffbahn grundsätzlich gleich lang ausgeführt.

Durch die Umlenkung der ersten Rollobahn um den Zugspriegel verläuft die erste Rollobahn derart, dass die erste Hälfte der Rollobahn der Außenseite zugewandt ist und die andere Hälfte parallel verlaufend dem Innenraum zugewandt ist. Diese Ausführung hat den Vorteil, dass der obere vom Innenraum nicht sichtbare Teilbereich der ersten Rollobahn aus einem preiswerteren Gewebe hergestellt sein kann. Vorzugsweise sind die Rollobahnen aus einem Stoffgewirke hergestellt. In einer Weiterbildung können die erste und die zweite Rollobahn aus Materialien mit unterschiedlichen Elastizitäten bestehen. Durch diese Ausführung kann eine Anpassung der Positionierung der Rollowelle in einem geringen Toleranzbereich erreicht werden.

Anstelle der Verwendung von zwei Rollowellen denen jeweils eine Rollobahn zugeordnet ist, verwirklicht die vorliegende Erfindung ein Konzept, die lediglich eine Rollowelle vorsieht, wobei die Rollowelle mittig im transparenten Dachbereich angeordnet ist. Die Rollowelle überspannt dabei den transparenten Dachbereich in Querrichtung. Die Anordnung lediglich einer Rollowelle spart sowohl eine weitere Rollowelle als auch einen zugeordneten Antrieb bei einer Ausführung einer elektrischen Betätigung ein.

Die Verstellung der Rollobahnen erfolgt vorzugsweise über die Rotation der Rollowelle und Zugspriegel, wobei jeder Rollobahn ein Zugspriegel zugeordnet ist.

Bevorzugt kann die Rollowelle als flexible Welle ausgeführt sein, wodurch sich eine gewölbte Rotationsachse ergibt. Dies ermöglicht eine Anpassung an die Dachkrümmung.

In einer bevorzugten Ausführungform ist die Rollowelle zum Innenraum hin mittels eines Verkleidungselementes abgedeckt.

Weiterhin bevorzugt sind in das Verkleidungselement Bedienelemente und/oder Lichtelemente integriert angeordnet. Bei dieser Ausführungsform kann die vorhandene Verkleidung mit zusätzlichen Funktionen ausgestattet sein und von Fahrzeuginsassen genutzt werden bzw. bietet eine Beleuchtungsfunktion.

Längsausrichtung bezieht sich im Sinne der vorliegenden Erfindung auf die Fahrzeuglängsrichtung, die der in den Figuren eingezeichneten x-Richtung entspricht.

Die Erfindung wird nachfolgend anhand in den Zeichnungen schematisch dargestellter Ausführungsbeispiele beschrieben.

Es zeigt:
- Fig. 1: ein Beschattungssystem in einer Seitenansicht im Schnitt im eingebauten Zustand mit transparenter Dachfläche und den Randbereichen des vorderen und hinteren Fahrzeugdaches mit einer Anordnung einer Rollowelle nach dem Stand der Technik,
- Fig. 2: das Funktionsprinzip des erfindungsgemäßen Beschattungssystems dargestellt am Prinzip des Flaschenzugs mit Blick auf die Wegeübersetzung,
- Fig. 3: eine schematische Darstellung des erfindungsgemäßen Beschattungssystems mit Rollowelle, Rollobahnen und Umlenkelement bei einer Verstellung der Stoffbahnen,
- Fig. 4: eine schematische Darstellung des erfindungsgemäßen Beschattungssystems mit einer außermittigen Anordnung der Rollowelle in einer ersten Variante; und
- Fig. 5: eine schematische Darstellung des erfindungsgemäßen Beschattungssystems mit einer außermittigen Anordnung der Rollowelle in einer zweiten Variante.

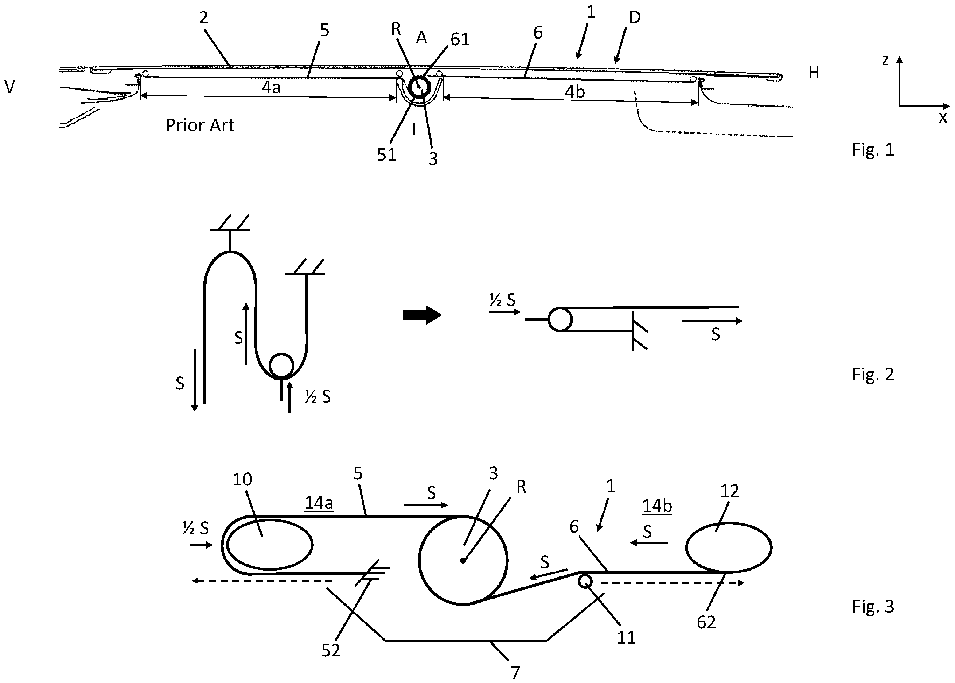

Entsprechend Fig. 1, die einen aus dem Stand der Technik bekanntes Beschattungssystem 1 zeigt, ist im Wesentlichen ein hier nur teilweise dargestelltes Fahrzeugdach mit einem Glasmodul mit einer transparenten Dachfläche 2 sowie das Beschattungssystem 1 im ausgefahrenen Zustand (Betriebsstellung: Lichtdurchtrittsfläche komplett abgeschattet) dargestellt. Die transparente Dachfläche 2 im Fahrzeugdach bildet dabei eine Lichtdurchtrittsfläche für den Lichtdurchtritt des Umgebungslichts des Außenraums A in den Innenraum I des Fahrzeugs und überspannt einen Dachausschnitt D. Die linke Seite der Darstellung ist dabei der vordere Dachbereich V und die rechte Seite der heckseitige Dachbereich H. Unterhalb des Beschattungssystems 1 befindet sich der Innenraum des Fahrzeugs I, oberhalb der Dachfläche der Außenraum A. Die Fahrzeuglängsrichtung ist mit x, die Fahrzeugquerrichtung mit y und die Hochrichtung mit der z-Achse eines Koordinatensystems gekennzeichnet.

Die transparente Dachfläche 2 erstreckt sich im Wesentlichen über die gesamte Breite und die gesamte Länge des Fahrzeugdachs und ist im einfachsten Fall ein Glasdach, das als starres Glaselement aufgebaut ist oder auch verschiebbare Teilelemente umfasst. Im Bereich der seitlichen Begrenzung (y-Richtung) der transparenten Dachfläche 2 sind je ein rechtes und ein linkes Führungselement in z-Richtung etwa parallel zum Verlauf der transparenten Dachfläche 2 angeordnet. Beide Führungselemente sind entsprechend der seitlichen Dachöffnung unterhalb der nicht transparenten Dachfläche zurückversetzt und in x-Richtung parallel beabstandet angeordnet. Die Führungselemente sind zeichnerisch nicht dargestellt.

Das Beschattungssystem 1 umfasst eine Rollowelle 3 und eine erste und zweite Rollobahn 5, 6 als Beschattungselemente welche im ausgefahrenen/abgewickelten Zustand annähernd die gesamte Lichtdurchtrittsfläche der transparenten Dachfläche 2 abschatten.

Die Rollowelle 3 ist, in Fahrzeuglängsrichtung gesehen, mittig im Bereich der Dachöffnung D bzw. des transparenten Fahrzeugdachs 2 derart angeordnet, dass der transparente Dachbereich 2 in zwei gleich große Teilbereiche nämlich in einen ersten vorderen und zweiten hinteren Teilbereich 4a, 4b unterteilt wird.

Im eingefahrenen aufgewickelten Zustand lassen sich die Rollobahnen 5, 6 beidseits bis an die Rollowelle 3 zurückschieben, so dass nahezu die gesamte Lichtdurchtrittsfläche der transparenten Dachfläche 2 zur Verfügung steht.

Im Unterschied zu der aus dem Stand der Technik bekannten "mittigen Anordnung" der Rollowelle 3 wird gemäß der vorliegenden Erfindung wie nachfolgend näher beschrieben, unter Ausnutzung des Flaschenzugprinzips die Rollowelle 3 außermittig (in x-Richtung) im Bereich der zu beschattenden Lichtdurchtrittsfläche angeordnet.

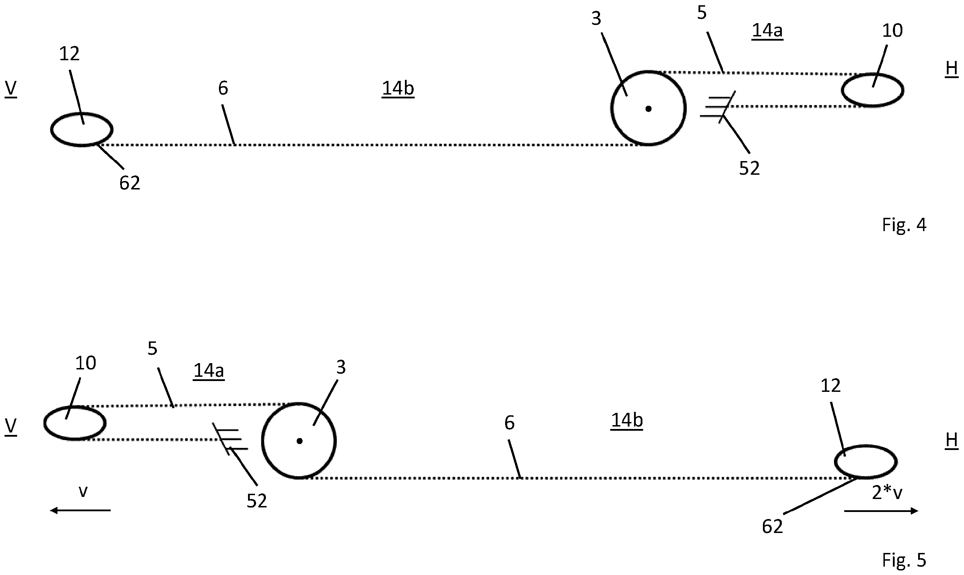

Die Figuren 4 und 5 zeigen dabei zwei mögliche Anordnungen einer außermittigen Anordnung der Rollowelle 3 bei einer nachfolgend beschriebenen Umlenkung der ersten Rollobahn 5 über ein erstes Umlenkelement 10. Die schematische Darstellung zeigt dabei die Betriebsstellung, in der die Lichtdurchtrittsfläche komplett abgeschattet ist.

Die erste und zweite Rollobahn 5, 6 sind als Stoffbahnen gleicher Länge ausgeführt. Die erste und zweite Rollobahn 5, 6 umfassen dabei jeweils einen ersten und einen zweiten Endbereich 51/61, 52/62.

Im eingefahrenen aufgewickelten Zustand lassen sich die erste und zweite Rollobahn 5, 6 beidseits bis an die Rollowelle 3 zurückschieben, so dass nahezu die gesamte Lichtdurchtrittsfläche der transparenten Dachfläche 2 (abzüglich der Fläche der Abdeckung für die Rollowelle) zur Verfügung steht und keine Abschattung erfolgt. Die Situation des gleichzeitigen/gleichmäßigen Zurückschiebens der ersten und zweiten-Rollobahn 5, 6 ist in der Figur 3 und den entsprechenden Bewegungspfeilen dargestellt.

Zur oben beschriebenen Verstellung der beiden Rollobahnen 5, 6 sind diese über ihre einander zugewandten ersten Endbereich 51, 61 an der Rollowelle 3 derart befestigt, dass bei einer Drehbewegung der Rollowelle 3 um ihre Rotationsachse R die Rollobahnen parallel zueinander auf der Rollowelle 3 aufgewickelt oder abgewickelt werden, und wobei die erste Rollobahn 5 einem ersten Teilbereich 14a des Dachausschnitts und die zweite Rollobahn 6 einem zweiten Teilbereich 14b zugeordnet ist. Die Verstellung der Rollobahnen 5, 6 über die Rotation der Rollowelle 3 erfolgt dabei gleichzeitig.

Grundsätzlich kann die Rotationsachse R der Rollowelle auch in gebogener Form ausgeführt sein. Hierdurch kann die Rollowelle der Dachkrümmung in Querrichtung (y-Richtung) angepasst werden. Dies kann durch eine Vielzahl kleiner Hülsenabschnitte erreicht werden, die bei der Montage zur Erzielung eines Krümmungsverlaufs ineinander gesteckt werden und zur Lagerung der Rollowelle dienen.

Das Ausführungsbeispiel der Figur 4 zeigt dabei in einer ersten Variante eine Zuordnung des ersten Teilbereichs 14a dem hinteren Teilbereich des Dachausschnitts. Gemäß der Figur 5 ist der erste Teilbereich 14a dem vorderen Teilbereich des Dachausschnitts in Längsrichtung gesehen, zugeordnet.

Wie es aus den Figuren 3, 4, 5 ersichtlich ist, wird die erste Rollobahn 5 über ein Umlenkelement 10, um 180 Grad in Richtung auf die Rollowelle 3 umgelenkt. Die umgelenkte erste Rollobahn 5 wird an ihrem freien zweiten Endbereich 52 im Bereich der Rollowelle 3 fahrzeugfest angebunden. Das Umlenkelement 10 ist dabei als Zugspriegel ausgeführt, so dass die Rollobahn 5 ausgehend von der Rollowelle 3 in den seitlichen Führungselementen geführt in Richtung auf die Vorderseite bzw. Rückseite (je nach Variante Fig. 4 oder Figur 5) gespannt gehalten und gleitend verschoben werden kann.

Durch diese Umlenkung um den Zugspriegel 10 verläuft die erste Rollobahn 5 in der in den Figuren 4 und 5 gezeigten Betriebsstellung derart, dass die erste Hälfte (erster Teilabschnitt) der Rollobahn 5 ausgehend von dem ersten Endbereich 51 bis zum Umlenkelement 10 obenliegend der Außenseite zugewandt ist und die andere Hälfte (zweiter Teilabschnitt) der Rollobahn parallel verlaufend ausgehend von dem Umlenkelement 10 zur Anbindungsstelle im Bereich der Rollowelle dem Innenraum zugewandt ist. Der erste Teilabschnitt der Rollobahn 5, der vom Innenraum nicht sichtbar ist, kann dabei aus einem preiswerteren Gewebe hergestellt sein, als der parallel verlaufende zweite Teilabschnitt der Rollobahn 5, der innenliegend verläuft.

Der erste Teilabschnitt kann aus einem Material gewählt werden, welches verbesserte Wärme/Licht dämmende Eigenschaften besitzt. Der zweite Teilabschnitt kann aus einem Material höherer Qualität mit einer verbesserten Oberflächenbeschaffenheit ausgeführt sein.

In einer alternativen Ausführungsform kann der erste Teilabschnitt der ersten Rollobahn 5 aus einem elastischen Material ausgeführt sein. Hierdurch kann das Aufteilungsverhältnis der beiden Teilbereiche 14a, 14b angepasst bzw. gesteuert werden.

Die zweite Rollobahn 6 ist über ein nahe der Rollowelle 3 angeordnetes Umlenkelement 11 nach hinten geführt. Das freie Ende der zweiten Rollobahn bzw. der zweite Endbereich 62 der Rollobahn 6 ist an einem Zugsspriegel 12 angebunden, so dass die Rollobahn 6 ausgehend von der Rollowelle 3 in den seitlichen Führungsschienen geführt in Richtung auf die Hinterseite H gespannt gehalten und gleitend verschoben werden kann. (Variante Fig. 5)

Aufgrund dieser Umlenkung und Anbindung der ersten Stoffbahn 5 und der Anbindung und Anordnung der zweiten Stoffbahn 6 ist der mittels der umgelenkten Stoffbahn abzudeckende Teilbereich 14a hinsichtlich seiner Größe in der Längsausrichtung (x-Richtung) halb so groß wie der Teilbereich 14b der nicht umgelenkten Stoffbahn 6. Die Aufteilung der abzudeckenden Teilbereiche 14a :14b entspricht dabei einem Verhältnis 1:2. Die Rollowelle 3 ist dementsprechend außermittig angeordnet.

Wenn keine Beschattung vorgesehen ist (Ruhestellung), sind die beiden Stoffbahnen 5, 6 parallel zueinander auf der Rollowelle 3 derart aufgewickelt, dass der vordere Zugspriegel 10 benachbart zu der Rollowelle 3 im ersten Teilbereich 14a angeordnet und das freie Ende 62 der zweiten Stoffbahn 6 mit Zugspriegel 12 benachbart zu der Rollowelle 3 im zweiten Teilbereich 14b angeordnet ist. Bei einer Drehbewegung der Rollowelle 3 werden die beiden Rollobahnen gleichzeitig auf- bzw. abgewickelt werden.

In der Ruhestellung, in der die beiden Rollobahnen komplett aufgewickelt sind, sind der erste und der zweite Teilbereich 14a, 14b des transparenten Glaselementes 2 maximal frei und unbeschattet. In einer möglichen Betriebsstellung sind die beiden Rollobahnen 5, 6 komplett abgewickelt und der erste und zweite Teilbereich 14a, 14b des transparenten Glaselementes 2 sind komplett beschattet. Es ist selbstverständlich, dass die Rollobahnen 5, 6 auch nur teilweise in jeder beliebigen Zwischenstellung zwischen unbeschattet und beschattet verstellt werden können.

Wie es anhand der Prinzipdarstellungen der Figur 2 verdeutlicht ist, verschiebt sich der vordere Zugspriegel 10 aufgrund der Umlenkung und Anbindung der ersten Rollobahn 5 nur um den halben Wickelweg. Die zweite Rollobahn 6, die über ihren zweiten Endbereich 62 an einem zweiten Zugspriegel 12 angebunden und nicht um 180 Grad umgelenkt ist, verschiebt sich bei einer Rotation der Rollowelle 3 gleichzeitig mit der ersten Rollobahn 5 allerdings um den ganzen Wickelweg. Die Abkürzung S steht dabei für Weg der Stoffbahn bzw. Wickelweg.

Bei dem in der Figur 3 gezeigten schematischen Ausführung des Beschattungssystems 1 deckt die zweite Stoffbahn 6 in der Betriebsstellung einen Teilbereich 14b von 964 mm ab, die erste Stoffbahn 5, die nur um den halben Wickelweg ½ s ausgezogen ist, deckt in der Betriebsstellung einen Teilbereich 14a von 482mm ab.

Die Rollowelle 3 ist mit einem Verkleidungselement 7 derart abgedeckt, dass die Rollowelle 3 von einem Fahrzeuginsassen, der in Richtung des Beschattungssystems nach oben blickt, nicht sichtbar ist.

Das Verkleidungselement 7 dient, wie es bereits obenstehend erläutert ist der optischen Abdeckung der Rollowelle 3 zum Innenraum hin. Zusätzlich kann das Verkleidungselement 7 auch zur Integration von Bedienelementen und/oder Lichtelementen wie Lichtleiteranordnungen genutzt werden.

Es ist selbstveständlich, dass die Betätigung des Beschattungssystems 1 sowohl manuell als auch elektrisch betätigbar ausgeführt sein kann. Bei der elektrischen Betätigung wird die Rotation der Rollowelle über einen Elektromotor bewirkt. Bei der manuellen Betätigung ist die Rollowelle 3 vorzugsweise mit einer Drehfeder derart verbunden, so dass beim Aufheben der auf die Zugspriegel einwirkenden Zugkräfte die Rollobahnen 5, 6 unter Einwirkung der gespannten Drehfeder wieder auf die Rollowelle 3 aufgewickelt werden.

Bei der manuellen Betätigung kann eine Seilsteuerung derart eingesetzt werden, dass mittels einer Seilumlenkung ein Gleichlauf in Querrichtung gesehen von links nach rechts gewährleistet werden kann. Ebenso kann der erste Zugspriegel über den zweiten Zugspriegel gleichlaufend mitangesteuert werden.

Der der Erfindung zugrunde liegende Gedanke ist anhand der Figuren an dem Beispiel einer Umlenkung der ersten Stoffbahn 5 um 180° Grad um eine Umlenkrolle beschrieben. Es ist allerdings selbstverständlich, dass auch eine mehrfache Umlenkung mittels einer Vielzahl von Umlenkrollen unter Ausnutzung des Flaschenzugprinzips und entsprechender Wegeübersetzung möglich ist. In Abhängigkeit der Anzahl Umlenkrollen verschiebt sich die Anordnung der Rollowelle entsprechend.

## Patentansprüche

1. Beschattungssystem (1) für eine transparente Dachfläche (2) eines Fahrzeugs, insbesondere für ein Kraftfahrzeug,
- mit einer Rollowelle (3), die fahrzeugfest in einem mittleren Bereich der transparenten Dachfläche (2) um ihre Rotationsachse drehbar gelagert angeordnet ist, wobei die Rollowelle (3) die transparente Dachfläche (2) in einen ersten und einen zweiten Teilbereich (14a, 14b) unterteilt
- mit einer ersten und einer zweiten Rollobahn (5, 6), die zur Verstellung von einer eingefahrenen Position in eine ausgefahrene Position in der die transparente Dachfläche (2) zumindest teilweise abgedeckt ist und vice versa auf die eine Rollowelle (3) auf.- bzw. abwickelbar sind, wobei jede Rollobahn (5, 6) einen ersten und einen zweiten Endbereich (51, 52/61, 62) umfasst und wobei die beiden Rollobahnen (5, 6) jeweils über ihren ersten Enbereich (51, 61) an der einen Rollowelle (3) derart angebunden sind, dass bei einer Drehbewegung der Rollowelle (3) um ihre Rotationsachse (R) die Rollobahnen (5, 6) parallel zueinander auf der Rollowelle (3) aufgewickelt oder abgewickelt werden, derart, dass die erste Rollobahn (5) zur Abdeckung eines ersten Teilbereichs (14a) und die zweite Rollobahn (6) zur Abdeckung eines zweiten Teilbereichs (14b) angeordnet ist
- wobei die beiden Rollobahnen (5, 6) eine gleiche Länge aufweisen
- mit zwei in Längsrichtung (x) verlaufenden, in Querrichtung (y) beabstandet angeordneten Führungselementen zur verschieblichen Lagerung und Führung der beiden Rollobahnen (5, 6),
- wobei die zweite Rollobahn (6) bei einer Verstellbewegung in Längsrichtung verschiebbar gelagert ist.
**dadurch gekennzeichnet,**
- **dass** genau ein Umlenkelement (10) vorgesehen ist, wobei das eine Umlenkelement (10) eine Umlenkung der ersten Rollobahn (5) um 180° Grad bewirkt und sich unter Ausnutzung des Flaschenzugprinzips eine Wegeübersetzung und Aufteilung des ersten Teilbereichs (14a) im Verhältnis zum zweiten Teilbereich (14b) von 1:2 ergibt
- **dass** die umgelenkte erste Rollobahn (5) im Bereich ihres zweiten Endbereichs (52) im Bereich der Rollowelle (3) fahrzeugfest angebunden ist, wobei bei einer Verstellbewegung das Umlenkelement (10) in Längsrichtung verschoben wird.

2. Beschattungssystem (1) für eine transparente Dachfläche (2) eines Fahrzeugs nach Anspruch 1, **dadurch gekennzeichnet, dass** die zweite Rollobahn (6) ohne eine Umlenkung um 180° Grad verstellbar geführt ist.

3. Beschattungssystem (1) für eine transparente Dachfläche (2) eines Fahrzeugs nach einem der vorangehenden Ansprüche, **dadurch gekennzeichnet, dass** die Verstellung der Rollobahnen (5, 6) über die Rotation der Rollowelle (3) gleichzeitig erfolgt.

4. Beschattungssystem (1) für eine transparente Dachfläche (2) eines Fahrzeugs nach einem der vorangehenden Ansprüche, **dadurch gekennzeichnet, dass** die Rollowelle (3) zu einem Innenraum des Fahrzeugs hin mittels eines Verkleidungselementes (7) abgedeckt ist.

5. Beschattungssystem (1) für eine transparente Dachfläche (2) eines Fahrzeugs nach Anspruch 4, **dadurch gekennzeichnet, dass** in das Verkleidungselement (7) Bedienelemente und/oder Lichtelemente integriert angeordnet sind.

6. Beschattungssystem (1) für eine transparente Dachfläche (2) eines Fahrzeugs nach einem der vorangehenden Ansprüche, **dadurch gekennzeichnet, dass** die erste Rollobahn (5) dem vorderen Dachbereich zugeordnet ist und das genau eine Umlenkelement (10) als Zugspriegel ausgeführt ist und wobei die zweite Rollobahn (6) dem hinteren Dachbereich zugeordnet ist, und über ein nahe der Rollowelle (3) angeordnetes Umlenkelement (11) nach hinten geführt und der zweite Endbereich (62) der Rollobahn (6) an einem hinteren Zugsspriegel (12) angebunden ist und vice versa.

7. Beschattungssystem (1) für eine transparente Dachfläche (2) eines Fahrzeugs nach einem der vorangehenden Ansprüche, **dadurch gekennzeichnet, dass** durch die Umlenkung um den Zugspriegel (10) die erste Rollobahn 5 in Betriebsstellung derart verläuft, dass die erste Hälfte der Rollobahn (5) als erster Teilabschnitt ausgehend von dem ersten Endbereich (51) bis zum Umlenkelement (10) der Außenseite zugewandt ist und die andere Hälfte der Rollobahn (5) als zweiter Teilabschnitt parallel verlaufend ausgehend von dem Umlenkelement (10) zur Anbindungsstelle im Bereich der Rollowelle (3) dem Innenraum zugewandt ist.

8. Beschattungssystem (1) für eine transparente Dachfläche (2) eines Fahrzeugs nach Anspruch 7, **dadurch gekennzeichnet, dass** der erste Teilabschnitt und der zweite Teilabschnitt aus unterschiedlichen Materialien ausgeführt sind.

9. Beschattungssystem (1) für eine transparente Dachfläche (2) eines Fahrzeugs nach Anspruch 7, **dadurch gekennzeichnet, dass** der erste Teilabschnitt und der zweite Teilabschnitt aus Materialien mit einer unterschiedlichen Elastizität ausgeführt sind.

## Claims

1. Shading system (1) for a transparent roof surface (2) of a vehicle, in particular for a motor vehicle;
- having a roller blind shaft (3) which, mounted so as to be fixed to the vehicle and so as to be rotatable about the rotation axis thereof, is disposed in a central region of the transparent roof surface (2), wherein the roller blind shaft (3) divides the transparent roof surface (2) into a first and a second sub-region (14a, 14b);
- having a first and a second roller blind web (5, 6) which for adjustment are able to be wound onto or unwound from the one roller blind shaft (3), respectively, from a retracted position to a deployed position in which the transparent roof surface (2) is at least partially covered and vice versa, wherein each roller blind web (5, 6) comprises a first and a second end region (51, 52/61, 62), and wherein the two roller blind webs (5, 6) by way of the first end region (51, 61) thereof are in each case attached to the one rotor blind shaft (3) in such a manner that the roller blind webs (5, 6) in a rotating movement of the roller blind shaft (3) about the rotation axis (R) thereof are wound or unwound mutually parallel on the rotor blind shaft (3) in such a manner that the first roller blind web (5) is disposed so as to cover a first sub-region (14a) and the second roller blind web (6) is disposed so as to cover a second sub-region (14b);
- wherein the two roller blind webs (5, 6) are of identical length,
- having two guide elements which for mounting and guiding the two roller blind webs (5, 6) in a displaceable manner run in the longitudinal direction (x) and are disposed so as to be mutually spaced apart in the transverse direction (y);
- wherein the second roller blind web (6) in an adjustment movement is mounted so as to be displaceable in the longitudinal direction,
**characterized**
- **in that** exactly one deflection element (10) is provided, wherein the one deflection element (10) effects a deflection of the first roller blind web (5) by 180° and, while utilizing the pulley principle, this results in the distance being geared and the first sub-region (14a) being apportioned at a ratio to the second sub-region (14b) of 1:2;
- **in that** the deflected first roller blind web (5) in the region of the second end region (52) thereof, in the region of the rotor blind shaft (3), is attached so as to be fixed to the vehicle, wherein the deflection element (10) in an adjustment movement is displaced in the longitudinal direction.

2. Shading system (1) for a transparent roof surface (2) of a vehicle according to Claim 1, **characterized in that** the second roller blind web (6) is guided without deflection so as to be adjustable by 180°.

3. Shading system (1) for a transparent roof surface (2) of a vehicle according to one of the preceding claims, **characterized in that** the adjustment of the roller blind webs (5, 6) takes place simultaneously by way of the rotation of the roller blind shaft (3).

4. Shading system (1) for a transparent roof surface (2) of a vehicle according to one of the preceding claims, **characterized in that** the rotor blind shaft (3) towards an interior space of the vehicle is covered by means of a cladding element (7).

5. Shading system (1) for a transparent roof surface (2) of a vehicle according to Claim 4, **characterized in that** operating elements and/or lighting elements are disposed so as to be integrated in the cladding element (7).

6. Shading system (1) for a transparent roof surface (2) of a vehicle according to one of the preceding claims, **characterized in that** the first roller blind web (5) is assigned to the front roof region and the exactly one deflection element (10) is embodied as a tension bow, and wherein the second roller blind web (6) is assigned to the rear roof region and by way of a deflection element (11) disposed close to the rotor blind shaft (3) is guided towards the rear, and the second end region (62) of the roller blind web (6) is attached to a rear tension bow (12), and vice versa.

7. Shading system (1) for a transparent roof surface (2) of a vehicle according to one of the preceding claims, **characterized in that** the first roller blind web (5) as a result of the deflection about the tension bow (10) in the operating position runs in such a manner that the first half of the roller blind web (5) as the first sub-portion, proceeding from the first end region (51) up to the deflection element (10), faces the exterior, and the other half of the roller blind web (5) as the second sub-portion, proceeding from the deflection element (10) to the attachment point in the region of the roller blind shaft (3), runs in parallel so as to face the interior space.

8. Shading system (1) for a transparent roof surface (2) of a vehicle according to Claim 7, **characterized in that** the first sub-portion and the second sub-portion are embodied from different materials.

9. Shading system (1) for a transparent roof surface (2) of a vehicle according to Claim 7, **characterized in that** the first sub-portion and the second sub-portion are embodied from materials of different elasticities.

## Revendications

1. Système d'ombrage (1) pour une surface de toit transparente (2) d'un véhicule, notamment pour un véhicule automobile,
- comprenant un arbre de store (3), qui est agencé de façon solidaire du véhicule dans une zone centrale de la surface de toit transparente (2) de manière à pouvoir tourner autour de son axe de rotation, l'arbre de store (3) subdivisant la surface de toit transparente (2) en une première et une deuxième zone partielle (14a, 14b),
- comprenant une première et une deuxième bande de store (5, 6) qui, pour le réglage d'une position rétractée dans une position déployée dans laquelle la surface de toit transparente (2) est au moins partiellement recouverte et vice-versa, peuvent être enroulées sur et déroulées de l'arbre de store (3), chaque bande de store (5, 6) comprenant une première et une deuxième zone d'extrémité (51, 52/61, 62) et les deux bandes de store (5, 6) étant reliées chacune par l'intermédiaire de leur première zone d'extrémité (51, 61) à l'arbre de store (3), de telle sorte que, lors d'un mouvement de rotation de l'arbre de store (3) autour de son axe de rotation (R), les bandes de store (5, 6) sont enroulées sur ou déroulées de l'arbre de store (3) parallèlement l'une à l'autre, de telle sorte que la première bande de store (5) est agencée pour recouvrir une première zone partielle (14a) et la deuxième bande de store (6) pour recouvrir une deuxième zone partielle (14b),
- les deux bandes de store (5, 6) présentant une longueur identique,
- comprenant deux éléments de guidage s'étendant dans la direction longitudinale (x), agencés à distance dans la direction transversale (y), pour le montage mobile et le guidage des deux bandes de store (5, 6),
- la deuxième bande de store (6) étant montée de manière à pouvoir être déplacée dans la direction longitudinale lors d'un mouvement de réglage,
**caractérisé en ce que**
- exactement un élément de déviation (10) est prévu, l'élément de déviation (10) provoquant une déviation de la première bande de store (5) de 180 degrés et, en utilisant le principe du palan, une démultiplication de la course et une répartition de la première zone partielle (14a) par rapport à la deuxième zone partielle (14b) de 1:2 sont produites,
- la première bande de store déviée (5) est reliée de façon solidaire du véhicule dans la zone de sa deuxième zone d'extrémité (52) dans la zone de l'arbre de store (3), l'élément de déviation (10) étant déplacé dans la direction longitudinale lors d'un mouvement de réglage.

2. Système d'ombrage (1) pour une surface de toit transparente (2) d'un véhicule selon la revendication 1, **caractérisé en ce que** la deuxième bande de store (6) est guidée de manière à pouvoir être réglée sans une déviation de 180 degrés.

3. Système d'ombrage (1) pour une surface de toit transparente (2) d'un véhicule selon l'une quelconque des revendications précédentes, **caractérisé en ce que** le réglage des bandes de store (5, 6) a lieu simultanément par l'intermédiaire de la rotation de l'arbre de store (3).

4. Système d'ombrage (1) pour une surface de toit transparente (2) d'un véhicule selon l'une quelconque des revendications précédentes, **caractérisé en ce que** l'arbre de store (3) est recouvert vers un espace intérieur du véhicule au moyen d'un élément d'habillage (7).

5. Système d'ombrage (1) pour une surface de toit transparente (2) d'un véhicule selon la revendication 4, **caractérisé en ce que** des éléments de commande et/ou des éléments d'éclairage sont agencés de manière intégrée dans l'élément d'habillage (7).

6. Système d'ombrage (1) pour une surface de toit transparente (2) d'un véhicule selon l'une quelconque des revendications précédentes, **caractérisé en ce que** la première bande de store (5) est associée à la zone de toit avant et l'exactement un élément de déviation (10) est réalisé sous forme d'arceau de traction et la deuxième bande de store (6) est associée à la zone de toit arrière, et est guidée vers l'arrière par l'intermédiaire d'un élément de déviation (11) agencé à proximité de l'arbre de store (3) et la deuxième zone d'extrémité (62) de la bande de store (6) est reliée à un arceau de traction arrière (12) et vice-versa.

7. Système d'ombrage (1) pour une surface de toit transparente (2) d'un véhicule selon l'une quelconque des revendications précédentes, **caractérisé en ce que**, grâce à la déviation autour de l'arceau de traction (10), la première bande de store (5) s'étend en position de fonctionnement de telle sorte que la première moitié de la bande de store (5), en tant que première section partielle, est tournée vers le côté extérieur en partant de la première zone d'extrémité (51) jusqu'à l'élément de déviation (10) et que l'autre moitié de la bande de store (5), en tant que deuxième section partielle, est tournée vers l'espace intérieur en s'étendant parallèlement à partir de l'élément de déviation (10) jusqu'au point de liaison dans la zone de l'arbre de store (3).

8. Système d'ombrage (1) pour une surface de toit transparente (2) d'un véhicule selon la revendication 7, **caractérisé en ce que** la première section partielle et la deuxième section partielle sont réalisées en des matériaux différents.

9. Système d'ombrage (1) pour une surface de toit transparente (2) d'un véhicule selon la revendication 7, **caractérisé en ce que** la première section partielle et la deuxième section partielle sont réalisées en des matériaux ayant une élasticité différente.
